(19) Europäisches Patentamt / European Patent Office / Office européen des brevets

(11) **EP 3 155 034 B1**

(12) **EUROPÄISCHE PATENTSCHRIFT**

(45) Veröffentlichungstag und Bekanntmachung des Hinweises auf die Patenterteilung:
**30.01.2019 Patentblatt 2019/05**

(21) Anmeldenummer: **15728512.3**

(22) Anmeldetag: **11.06.2015**

(51) Int Cl.:
*C09J 175/06* (2006.01)          *C08G 18/42* (2006.01)
*C08G 18/32* (2006.01)          *C08G 18/73* (2006.01)
*C08G 18/75* (2006.01)          *C08G 18/66* (2006.01)
*C08G 18/12* (2006.01)          *C09J 7/38* (2018.01)

(86) Internationale Anmeldenummer:
**PCT/EP2015/063031**

(87) Internationale Veröffentlichungsnummer:
**WO 2015/189323 (17.12.2015 Gazette 2015/50)**

(54) **KLEBEBAND BASIEREND AUF POLYESTER-POLYURETHAN**

ADHESIVE TAPE BASED ON POLYESTER POLYURETHANE

BANDE ADHÉSIVE À BASE DE POLYESTER-POLYURÉTHANE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.06.2014 DE 102014211186**

(43) Veröffentlichungstag der Anmeldung:
**19.04.2017 Patentblatt 2017/16**

(73) Patentinhaber: **tesa SE**
**22848 Norderstedt (DE)**

(72) Erfinder:
• **von Wedel-Parlow, Tobias**
**22527 Hamburg (DE)**
• **SCHÜMANN, Uwe**
**25421 Pinneberg (DE)**
• **SPIES, Manfred**
**24576 Bad Bramstedt (DE)**
• **STREBL- PFARR, Maike**
**22529 Hamburg (DE)**

(56) Entgegenhaltungen:
**EP-A1- 0 192 946          EP-A1- 2 666 839**
**EP-A2- 1 323 769          WO-A1-2011/120895**
**WO-A1-2013/167250          DE-A1- 2 626 132**
**DE-A1- 10 162 349          JP-A- 2002 053 828**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung liegt auf dem Gebiet der Polyurethane, wie sie insbesondere zur Herstellung von Klebmassen verwendet werden. Speziell betrifft die Erfindung Polyester-Polyurethane und zu deren Herstellung eingesetzte Prepolymere sowie daraus erhältliche Haftklebemassen.

Haftklebrigkeit ist die Eigenschaft eines Stoffes, bereits unter relativ schwachem Andruck eine dauerhafte Verbindung zu einem Haftgrund einzugehen. Stoffe, die diese Eigenschaft besitzen, werden als Haftklebstoffe bezeichnet. Haftklebstoffe sind seit langem bekannt. Häufig können sie nach Gebrauch im Wesentlichen rückstandsfrei vom Haftgrund wieder abgelöst werden. Haftklebstoffe sind in der Regel bei Raumtemperatur permanent eigenklebrig, weisen also eine gewisse Viskosität und Anfassklebrigkeit auf, so dass sie die Oberfläche des jeweiligen Haftgrunds bereits bei geringem Andruck benetzen. Die Fähigkeit eines Haftklebstoffs, auf Werkstoffen zu haften und Kräfte zu übertragen, beruht auf dem Adhäsionsvermögen und der Kohäsion des Haftklebstoffs.

Haftklebstoffe können als extrem hochviskose Flüssigkeiten mit einem elastischen Anteil betrachtet werden. Sie haben demzufolge charakteristische viskoelastische Eigenschaften, die zu der dauerhaften Eigenklebrigkeit und Klebfähigkeit führen.

Kennzeichnend für sie ist, dass es, wenn sie mechanisch deformiert werden, sowohl zu viskosen Fließprozessen als auch zum Aufbau elastischer Rückstellkräfte kommt. Beide Prozesse stehen hinsichtlich ihres jeweiligen Anteils in einem bestimmten Verhältnis zueinander, abhängig sowohl von der genauen Zusammensetzung, der Struktur und dem Vernetzungsgrad des jeweiligen Haftklebstoffs als auch von der Geschwindigkeit und Dauer der Deformation sowie von der Temperatur.

Der anteilige viskose Fluss ist zur Erzielung von Adhäsion notwendig. Nur die viskosen Anteile, hervorgerufen durch Makromoleküle mit relativ großer Beweglichkeit, ermöglichen eine gute Benetzung und ein Auffließen auf das zu verklebende Substrat. Ein hoher Anteil an viskosem Fluss führt zu einer hohen Haftklebrigkeit (auch als Tack oder Oberflächenklebrigkeit bezeichnet) und damit oft auch zu einer hohen Klebkraft. Stark vernetzte Systeme, kristalline oder glasartig erstarrte Polymere sind mangels fließfähiger Anteile in der Regel nicht oder zumindest nur wenig haftklebrig.

Die anteiligen elastischen Rückstellkräfte sind zur Erzielung von Kohäsion notwendig. Sie werden zum Beispiel durch sehr langkettige und stark verknäuelte sowie durch physikalisch oder chemisch vernetzte Makromoleküle hervorgerufen und ermöglichen die Übertragung der auf eine Klebverbindung angreifenden Kräfte. Sie führen dazu, dass eine Klebverbindung einer auf sie einwirkenden Dauerbelastung, zum Beispiel in Form einer dauerhaften Scherbelastung, in ausreichendem Maße über einen längeren Zeitraum standhalten kann.

Zur genaueren Beschreibung und Quantifizierung des Maßes an elastischem und viskosem Anteil sowie des Verhältnisses der Anteile zueinander können die mittels Dynamisch Mechanischer Analyse (DMA) ermittelbaren Größen Speichermodul (G') und Verlustmodul (G") herangezogen werden. G' ist ein Maß für den elastischen Anteil, G" ein Maß für den viskosen Anteil eines Stoffes. Beide Größen sind abhängig von der Deformationsfrequenz und der Temperatur.

Die Größen können mit Hilfe eines Rheometers ermittelt werden. Das zu untersuchende Material wird dabei zum Beispiel in Form einer planparallelen Schicht in einer Platte-Platte-Anordnung einer sinusförmig oszillierenden Scherbeanspruchung ausgesetzt. Bei schubspannungsgesteuerten Geräten werden die Deformation als Funktion der Zeit und der zeitliche Versatz dieser Deformation gegenüber dem Einbringen der Schubspannung gemessen. Dieser zeitliche Versatz wird als Phasenwinkel $\delta$ bezeichnet.

Der Speichermodul G' ist wie folgt definiert: G' = $(\tau/\gamma)$ * cos$(\delta)$ ($\tau$ = Schubspannung, $\gamma$ = Deformation, $\delta$ = Phasenwinkel = Phasenverschiebung zwischen Schubspannungs- und Deformationsvektor). Die Definition des Verlustmoduls G" lautet: G" = $(\tau/\gamma)$ * sin$(\delta)$ ($\tau$ = Schubspannung, $\gamma$ = Deformation, $\delta$ = Phasenwinkel = Phasenverschiebung zwischen Schubspannungs- und Deformationsvektor).

Ein Stoff und die daraus hergestellte Schicht gelten im Allgemeinen als haftklebrig und werden im Sinne dieser Schrift als haftklebrig definiert, wenn bei Raumtemperatur, hier definitionsgemäß bei 23 °C, im Deformationsfrequenzbereich von $10^0$ bis $10^1$ rad/sec G' und G" jeweils zumindest zum Teil im Bereich von $10^3$ bis $10^7$ Pa liegen.

Innerhalb dieses Bereiches, den man in einer Matrix-Auftragung aus G' und G" (G' aufgetragen in Abhängigkeit von G") auch als viskoelastisches Fenster für Haftklebeanwendungen oder als Haftklebstofffenster nach viskoelastischen Kriterien bezeichnen kann, gibt es wiederum unterschiedliche Sektoren und Quadranten, die die zu erwartenden Haftklebeeigenschaften der jeweils zugehörigen Stoffe näher charakterisieren. Stoffe mit hohem G" und niedrigem G' innerhalb dieses Fensters zeichnen sich beispielsweise im Allgemeinen durch eine hohe Klebkraft und eine geringe Scherfestigkeit aus, während sich Stoffe mit hohem G" und hohem G' sowohl durch eine hohe Klebkraft als auch durch eine hohe Scherfestigkeit auszeichnen.

Generell sind die Erkenntnisse über die Zusammenhänge zwischen Rheologie und Haftklebrigkeit Stand der Technik und beispielsweise in "Satas, Handbook of Pressure Sensitive Adhesive Technology, Third Edition, (1999), Seiten 153 bis 203" beschrieben.

Eine besondere Form von Haftung aufbauenden Stoffen liegt den Adhäsionsfolien zugrunde. Adhäsionsfolien sind dadurch charakterisiert, dass sie keine oder nur eine sehr geringe fühlbare Klebrigkeit haben, aber dennoch an Gegenständen mit glatter Oberfläche relativ gut haften. Der Hafteffekt (die Adhäsion) wird elektrostatischen Anziehungskräften zugeschrieben. Da elektrostatische Anziehungskräfte auch bei gewöhnlichen Kleb- oder Haftklebstoffen eine Rolle spielen und da die chemischen Zusammensetzungen der Adhäsionsfolienoberflächen sich nicht grundlegend von denen üblicher Kleb- oder Haftklebstoffe unterscheiden, müssen die Unterschiede zwischen einer üblichen Haftklebstoff- und einer Adhäsionsfolienoberfläche als graduell betrachtet werden. In Bezug auf das viskoelastische Fenster können die Haftung aufbauenden Stoffe der Adhäsionsfolien in der Regel in den Bereich mit niedrigem G" und mittleren bis hohen G' eingeordnet werden. Haftung aufbauende Stoffe dieser Art werden in dieser Schrift als Haftstoffe bezeichnet. Bei diesen Stoffen können G' und G" auch außerhalb der die Haftklebstoffe charakterisierenden Grenzen liegen.

Adhäsionsfolien (englisch: cling films oder static cling films) sind in vielfältiger Weise bekannt. In GB 2 128 199 A werden beispielsweise Polyolefin-Zusammensetzungen mit möglichen Alpha-Olefin-Anteilen sowie in WO 98/39157 A1 mit Anteilen an StyrolBlockcopolymeren zur Erzielung der Adhäsionseigenschaften vorgeschlagen. Polyolefin-Zusammensetzungen sowie Zusammensetzungen, die Ethylenvinylacetat-Copolymere enthalten, sind auch in WO 99/14261 A1 beschrieben. In WO 98/39157 A1 werden weiterhin verschiedene thermoplastische Elastomere erwähnt, zum Beispiel Copolyester, Polyurethane und Polyamide. In EP 1 849 811 B1 werden vernetzte Polyurethane zur Herstellung von Adhäsionsfolien vorgeschlagen.

Aus einer Reihe von Schriften sind Adhäsionsfolien aus weich gemachtem PVC oder anderen weichgemachten Polymeren bekannt. Beispiele sind in US 5,698,621 A, GB 2 368 300 A, DE 202 08 094 U, DE 100 12 261 A1, WO 01/68364 A1 oder WO 97/00772 A1 zu finden. In US 5,292,560 A werden Adhäsionsfolien auf Basis von Polyethylacrylat beschrieben.

Verwendung finden Adhäsionsfolien zum Beispiel als Displayschutz oder zum Anbringen von Informationen an Autoscheiben, zum Beispiel für Preisauszeichnungen.

So schlägt die DE 197 22 627 A1 die Verwendung einer Adhäsionsfolie zum Befestigen von Magnetstreifen- oder Chip-Karten auf einer Unterlage vor, insbesondere auf einem Papierbogen. In EP 1 656 669 B1 wird die Verwendung einer Adhäsionsfolie zum Befestigen und gleichzeitigen Abdecken und Schützen von optischen Speichermedien vorgeschlagen.

Ein chemisch vernetzter Haftklebstoff oder Haftstoff liegt vor, wenn der Haftklebstoff oder Haftstoff durch eine chemische Umsetzung mit einem Vernetzer einen Zustand erreicht hat, der ihn nicht mehr schmelzbar und nicht mehr in organischen Lösemitteln lösbar macht. Eine Verflüssigung ist dann nur noch durch Zersetzung möglich, die irreversibel ist. Als Vernetzer kommen alle mindestens difunktionellen Stoffe in Betracht, die mit den funktionellen Gruppen des Haftklebstoffes oder Haftstoffes chemische Vernetzungsreaktionen eingehen können. Ihre Auswahl richtet sich nach den funktionellen Gruppen des Haftklebstoffes oder Haftstoffes. Carboxygruppen tragende Haftklebstoffe oder Haftstoffe werden typischerweise mit Di- oder Polyepoxiden, eventuell unter zusätzlicher Katalyse, beispielsweise durch tertiäre Amine, oder mit Metallacetylacetonaten, Metallalkoxiden sowie Alkoxy-Metallacetylacetonaten vernetzt. Für die Vernetzung von Hydroxygruppen tragenden Haftklebstoffen oder Haftstoffen bieten sich beispielsweise Di- oder Polyisocyanate an.

Polymere oder Prepolymere, die die Eigenschaft besitzen, schmelzfähig und somit thermoplastisch verarbeitbar zu sein, werden in dieser Schrift, wie im Sprachgebrauch des Fachmanns üblich, als Hotmelts bezeichnet.

Unter einem Polyurethan-Prepolymer wird in dieser Schrift ein zumindest oligomeres, bevorzugt jedoch bereits selbst polymeres, durch chemische Umsetzung eines oder mehrerer Polyole mit einem oder mehreren Polyisocyanaten erhaltenes, insbesondere schmelzfähiges Reaktionsprodukt verstanden, das unter signifikantem Anstieg der Molmasse in ein Zielpolymer überführt werden kann. Polyurethane enthalten Einheiten, die durch Urethan-Gruppierungen -NH-CO-O- miteinander verknüpft sind.

Ein Polyurethan-Hotmelt-Prepolymer im Sinne dieser Schrift ist bei Raumtemperatur derart fest und formstabil, dass in bekannten Mischaggregaten bei Raumtemperatur ein kontinuierliches, homogenes Mischen mit weiteren Stoffen sowie insbesondere auch eine Ausformung oder ähnliche Verarbeitungsschritte nicht möglich sind, ohne dass es dabei zur Erwärmung des Polyurethan-Hotmelt-Prepolymers kommt oder ohne dass ein Hinzufügen von Lösemitteln, Verdünnungsmitteln oder anderer die Viskosität herabsetzender Zusatzstoffe notwendig ist. Bekannte Mischaggregate sind beispielsweise Kneter, Innenmischer, Extruder, Planetwalzenextruder, Planetenmischer, Butterfly-Mischer oder Dissolver. Die Verarbeitbarkeit eines Polyurethan-Hotmelt-Prepolymers im Sinne dieser Schrift ist erst dann möglich, wenn das Polyurethan-Hotmelt-Prepolymer in einem Lösemittel aufgelöst oder wenn es erwärmt wird, wobei die Wärme von außen durch Beheizung zugeführt oder durch Scherung erzeugt werden kann. Typische Verarbeitungstemperaturen für Polyurethan-Hotmelt-Prepolymere im Sinne dieser Schrift liegen im Bereich von 70° bis 160 °C, mindestens betragen sie 40 °C. Als Raumtemperatur wird in dieser Schrift 23 °C verstanden. Schmelzen bedeutet in diesem Sinne nicht notwendigerweise, dass im Moment des Überganges vom festen, formstabilen Zustand zum verflüssigten, mischbaren Zustand eine kristalline Schmelztemperatur oder eine glasartige Erstarrungstemperatur überschritten werden muss. Gemeint ist an dieser Stelle eine ausreichende Erniedrigung der Viskosität.

Ein Polyurethan-Hotmelt-Prepolymer im Sinne dieser Schrift hat eine mit einem Rheometer im Oszillationsversuch bei einer sinusförmig oszillierenden Scherbeanspruchung in einer Platte-Platte-Anordnung, einer Temperatur von 23 °C und einer Oszillationsfrequenz von 10 rad/s gemessene komplexe Viskosität von mindestens 1000 Pa*s, vorzugsweise mindestens 3000 Pa*s.

Die komplexe Viskosität $\eta^*$ ist folgendermaßen definiert: $\eta^* = G^* / \omega$ ($G^*$ = komplexer Schubmodul, $\omega$ = Winkelfrequenz).

Die weiteren Definitionen lauten: $G^* = \sqrt{(G')^2 + (G'')^2}$ ($G''$ = Viskositätsmodul (Verlustmodul), $G'$ = Elastizitätsmodul (Speichermodul)). $G'' = \tau/\gamma \cdot \sin(\delta)$ ($\tau$ = Schubspannung, $\gamma$ = Deformation, $\delta$ = Phasenwinkel = Phasenverschiebung zwischen Schubspannungs- und Deformationsvektor). $G' = \tau/\gamma \cdot \cos(\delta)$ ($\tau$ = Schubspannung, $\gamma$ = Deformation, $\delta$ = Phasenwinkel = Phasenverschiebung zwischen Schubspannungs- und Deformationsvektor). $\omega = 2\pi \cdot f$ (f = Frequenz).

Klebebänder, die mit Haftklebstoffen ausgerüstet sind, so genannte Haftklebebänder, werden heute im industriellen und privaten Bereich in vielfältiger Weise verwendet. Üblicherweise bestehen Haftklebebänder aus einer Trägerfolie, die ein- oder beidseitig mit einem Haftklebstoff ausgerüstet ist. Es gibt auch Haftklebebänder, die ausschließlich aus einer Haftklebstoffschicht und keiner Trägerfolie bestehen, die so genannten Transfer-Tapes. Die Zusammensetzung der Haftklebebänder kann sehr unterschiedlich sein und richtet sich nach den jeweiligen Anforderungen der unterschiedlichen Anwendungen. Die Träger bestehen üblicherweise aus Kunststofffolien wie zum Beispiel Polypropylen, Polyethylen, Polyester oder auch aus Papier, Gewebe oder Vliesstoff.

Die Haftklebstoffe bestehen üblicherweise aus Acrylat-Copolymeren, Silikonen, Naturkautschuk, Synthesekautschuk, Styrolblockcopolymeren oder Polyurethanen.

Aufgrund von ökologischen Gesichtspunkten, Nachhaltigkeit und vor dem Hintergrund der immer knapper werdenden Ressourcen an Erdöl und auf der anderen Seite eines weltweit stark wachsenden Verbrauches an Kunststoffen gibt es seit einigen Jahren die Bestrebung, Kunststoffe auf Basis von nachwachsenden Rohstoffen herzustellen. Dies gilt insbesondere für biologisch abbaubare Polymere, die in Verpackungsanwendungen oder Folienanwendungen Verwendung finden sollen. Auch für medizinische Anwendungen spielen biologisch abbaubare Produkte eine zunehmend wichtige Rolle. Einige biobasierte beziehungsweise bioabbaubare Kunststoffe sind heute kommerziell verfügbar. Biobasiert heißt "hergestellt aus nachwachsenden Rohstoffen".

"Bioabbaubare Polymere" ist eine Bezeichnung für natürliche und synthetische Polymere, die kunststoffähnliche Eigenschaften (Kerbschlagzähigkeit, Thermoplastifizierbarkeit) aufweisen, aber im Gegensatz zu konventionellen Kunststoffen von einer Vielzahl von Mikroorganismen in biologisch aktiver Umgebung (Kompost, Faulschlamm, Erde, Abwasser) abgebaut werden; dies passiert nicht notwendigerweise unter üblichen Haushaltsbedingungen (Kompostierung im Garten). Eine Definition der Bioabbaubarkeit findet sich in den Europäischen Normen DIN EN 13432 (biologischer Abbau von Verpackungen) und DIN EN 14995 (Kompostierbarkeit von Kunststoffen).

Der Fachmann unterscheidet zwischen der Desintegration (Zersetzung) und der biologischen Abbaubarkeit. Die Desintegration (Zersetzung) bezeichnet die physikalische Zerlegung in sehr kleine Fragmente.

Die Bestimmung der Desintegrierbarkeit (des Zersetzungsgrades) von Polymeren wird unter anderem in der DIN EN ISO 20200 beschrieben. Hierbei wird die zu untersuchende Probe in einem definierten künstlichen Feststoffabfall bei 58 $\pm$ 2 °C für mindestens 45 und höchstens 90 Tage gelagert. Anschließend wird die gesamte Probe durch ein 2 mm Sieb gesiebt und der Zersetzungsgrad D wie folgt bestimmt.

$$D = \frac{m_i - m_r}{m_i} \times 100$$

Dabei ist

$m_i$: die anfängliche Trockenmasse des Probenmaterials
und
$m_r$: die Trockenmasse des restlichen, durch Sieben erhaltenen Probenmaterials.

Unter der biologischen Abbaubarkeit versteht man im Allgemeinen die Zerlegbarkeit einer chemischen Verbindung oder eines organischen Materials durch Mikroorganismen in Gegenwart von Sauerstoff in Kohlendioxid, Wasser und Salze anderer vorhandener Elemente (Mineralisation) unter Bildung neuer Biomasse oder in Abwesenheit von Sauerstoff in Kohlendioxid, Methan, Mineralsalze und neue Biomasse. Der biologische Abbau erfolgt extra- und/oder intrazellulär durch Bakterien, Pilze und Mikroorganismen, sowie deren Enzyme.

Die biologische Abbaubarkeit von Verpackungsmaterialien wird in der DIN EN 13432 "Anforderungen an die Verwertung von Verpackungen durch Kompostierung und biologischen Abbau" normativ geregelt. Hierbei wird das zu prüfende Material einem aeroben Abbautest gemäß ISO 14855:1999 "Bestimmung der vollständigen aeroben Bioabbaubarkeit von Kunststoff-Materialien unter den Bedingungen kontrollierter Kompostierung" unterzogen und innerhalb von maximal sechs Monaten muss im Vergleich zu einer geeigneten Referenzsubstanz ein Abbaugrad von mindestens 90% erreicht werden. Der Abbaugrad wird dabei durch die gemessene Kohlenstoffdioxidentwicklung bestimmt. Die zerkleinerte Probe wird mit Vermiculit oder gut arbeitendem belüftetem Kompost als Inokulum in einem mit Luftzufuhr ausgestattetem Gefäß bei 58 $\pm$ 2 °C gelagert und die $CO_2$-Entwicklung fortlaufend aufgezeichnet. Aufgrund der apperativen Komplexität gibt es eine Reihe von Prüfinstituten, die sich auf die Prüfung spezialisiert haben und anschließend ein entsprechendes Zertifikat, wie etwa das OK compost von Vingotte, ausstellen.

Nach Beendigung der Prüfung ergibt sich die Abbaurate $D_t$ als:

$$D_t = \frac{(CO_2)_T - (CO_2)_B}{ThCO_2} \times 100$$

Dabei ist

$(CO_2)_T$: die kumulative Menge des in jedem die Prüfsubstanz enthaltendem Kompostiergefäß gebildeten Kohlendioxides in Gramm je Gefäß;

$(CO_2)_B$: die mittlere kumulative Menge an Kohlendioxid, das in den Blindwertgefäßen gebildet wird, in Gramm je Gefäß;

$ThCO_2$: die theoretische Menge an Kohlendioxid, das durch die Prüfsubstanz gebildet werden kann, in Gramm je Gefäß.

Neben der biologischen Abbaubarkeit beinhaltet die DIN EN 13432 auch einen Test zur Bestimmung der Qualität des durch den Abbau entstehenden Komposts. Dieser darf keine negativen Auswirkungen auf das Pflanzenwachstum haben.

In der Regel weisen biologisch abbaubare Komponenten auch eine hohe Desintegrationsrate auf, wohingegen die Desintegration eines Werkstoffs nicht zwingend für eine biologische Abbaubarkeit spricht.

Aufgrund der Tatsache, dass ökologische Aspekte, die die biologische Abbaubarkeit betreffen, auch für Haftklebebänder eine immer wichtigere Rolle spielen, wurden in der Vergangenheit auch Haftklebebänder vorgestellt, die als Trägermaterial biologisch abbaubare Folien verwenden. Die verwendeten Folien basieren häufig auf Polymilchsäurecompounds. Polymilchsäure ist ebenso wie weitere biologisch abbaubare und für die Anwendung in Frage kommende thermoplastische Polymere relativ hart und spröde. Um für Folienanwendungen geeignet zu sein, müssen diese in Betracht kommenden biologisch abbaubaren Polymere mit weicheren Polymeren compoundiert werden, die häufig nicht oder schlechter biologisch abbaubar sind.

Hinsichtlich der Haftklebstoffe sind die Möglichkeiten weiter eingeschränkt. Haftklebstoffe sind amorphe Materialien mit niedrigem Glasübergangspunkt.

Die klassischen Gerüstpolymere wie Naturkautschuk, Styrolblockcopolymere oder Polyacrylate sind gemäß den in Europa zugrunde liegenden Normen wie zum Beispiel der DIN EN 13432 nicht biologisch abbaubar. Gleiches gilt für die übliche Tackifierharze wie Kolophoniumderivate, Kohlenwasserstoffharze oder Terpenphenolharze. Siliconhaftklebstoffe scheiden aufgrund ihrer hervorragenden Alterungsstabilität gänzlich aus. Kriterium für eine biologische Abbaubarkeit ist üblicherweise das Vorhandensein von Heteroatomen in der Kohlenstoffhauptkette. Eine chemische Bindung zwischen einem Kohlenstoffatom und einem Heteroatom wie zum Beispiel Sauerstoff oder Stickstoff ist instabiler und damit einem biologischen Abbau leichter zugänglich als eine Bindung zwischen zwei Kohlenstoffatomen.

Aufgrund dieser Gegebenheiten bieten sich Polyesterhaftklebstoffe für entsprechende Anwendungen an. Polyesterhaftklebstoffe haben aber häufig den Nachteil, dass die Anfassklebkraft dieser Klebsysteme sich auf einem relativ niedrigen Niveau befindet. Der Zusatz von üblichen verträglichen Tackifiern wie zum Beispiel Klebharzen würde hier zwar einerseits für Abhilfe sorgen, andererseits aber auf Kosten der biologischen Abbaubarkeit gehen.

In JP 2007 070 422 A1 wird ein biologisch abbaubarer Haftklebstoff auf Basis eines Polyesterpolyurethans beschrieben, der aber den Nachteil hat, schmelzfähig zu sein. Mit schmelzfähigen Haftklebstoffen sind prinzipiell keine guten Verklebungsfestigkeiten bei höheren Temperaturen erzielbar.

Aus JP 63 189 486 A ist ein feuchtigkeitshärtender Haftklebstoff auf Basis eines Polyesterpolyurethans bekannt. Feuchtigkeitshärtende Haftklebstoffe sind für die Verwendung in Klebebändern problematisch, da ein effektiver Schutz vor Feuchtigkeitszutritt vor der Applikation notwendig ist.

In JP 08 157 798 A wird vorgeschlagen, ein flüssiges Polycaprolacton-Diol und eine Dicarbonsäure mit Dioder Polyisocyanaten zu einem Haftklebstoff umzusetzen. Das beschriebene Reaktivsystem ist zunächst flüssig. Erst nachdem der Haftklebstoff durch die beschriebene chemische Reaktion entstanden ist, tritt eine Verfestigung ein. Flüssige Reaktivsysteme haben im Hinblick auf eine kontinuierliche Beschichtung, die in der Regel den zentralen Prozessschritt einer üblichen Klebebandfertigung darstellt, den Nachteil, dass sie in diesem Zustand nicht oder zumindest nicht mit konstanter Schichtdicke auf einem Trägermaterial aufgewickelt werden können, insbesondere dann nicht, wenn es sich um hohe Schichtdicken handelt.

Aufgabe der Erfindung ist es, hier Abhilfe zu schaffen und Haftklebstoffe bereitzustellen, die für technische Anwendungen zugänglich sind, das Eigenschaftsprofil von üblichen Haftklebstoffen zeigen und biologisch abbaubar sind. Die Haftklebstoffe sollen insbesondere hinsichtlich ihrer klebtechnischen Eigenschaften breit einstellbar sein, wobei sie so ausgeführt werden können sollen, dass sowohl eine hohe Kohäsion als auch ein hohes Adhäsionsvermögen erreicht werden. Es soll aber auch möglich sein, sie so zu formulieren, dass sie leicht und rückstandsfrei vom Untergrundgrund abgelöst werden können und dass sie keine oder nur eine sehr geringe fühlbare Klebrigkeit (Tack) haben. Weiterhin sollen die Haftklebstoffe auch so formuliert werden können, dass sie auch bei höheren Temperaturen, zum Beispiel bei 70 °C, noch eine gute Scherfestigkeit besitzen. Zur Lösung der Aufgabe sieht die Erfindung ein lineares Polyurethan-Prepolymer auf Polyester-Basis vor, das sich zu einem haftklebrigen Polyurethan vernetzen lässt. Ein erster und allgemeiner Gegenstand der Erfindung ist somit ein Klebeband, das ein Trägermaterial und mindestens eine Zusammensetzung als Haftklebemasse umfasst, die zu insgesamt mindestens 60 Gew.-% ein oder mehrere Polyurethane enthält, die durch chemische Vernetzung eines Polyurethan-Prepolymers erhältlich sind, das durch chemische Reaktion von

a) einem oder mehreren aliphatischen Polyester-Polyolen A mit einer Hydroxy-Funktionalität von 1,8 bis einschließlich 2 und einem zahlengemitteltem Molekulargewicht von gleich/größer 1000 g/mol;

b) einer oder mehreren Verbindungen B mit einer Hydroxy-Funktionalität von 1,8 bis einschließlich 2 und einem zahlengemittelten Molekulargewicht von kleiner 1000 g/mol; und

c) einem oder mehreren aliphatischen Diisocyanaten C

erhältlich ist, wobei das Verhältnis der Gesamtanzahl der Isocyanat-Gruppen zur Gesamtanzahl der Hydroxygruppen der an der chemischen Reaktion beteiligten Stoffe größer/gleich 0,4 und kleiner 1 ist.

Ein derartiges Polyurethan-Prepolymer zeichnet sich insbesondere durch strenge Linearität aus. Dies ist vorteilhaft, weil sich lineare Polymerstränge deutlich besser biologisch abbauen lassen als verzweigte. Zudem ermöglicht die Linearität des Prepolymers längere Topfzeiten bei der vorgesehenen späteren Vernetzung zu einer Haftklebemasse, wobei häufig unmittelbar nach Zugabe des Vernetzers der Auftrag auf ein Substrat erfolgt.

Das zahlengemittelte Molekulargewicht der Polyester-Polyole A beträgt bevorzugt größer 1500 g/mol und besonders bevorzugt größer 2000 g/mol.

Unter der Hydroxy-Funktionalität wird die Zahl der Hydroxygruppen pro Molekül eines Polyols verstanden. Sie wird in dieser Schrift auf das zahlengemittelte mittlere Molekulargewicht des jeweiligen Polyols bezogen und nach der folgenden Formel berechnet:

$$f = M_n[g/mol] \times OHZ \ [mmol \ OH/kg]/10^6$$

f ist die Hydroxy-Funktionalität. $M_n$ ist das zahlengemittelte mittlere Molekulargewicht des jeweiligen Polyols in der Einheit [g/mol] und OHZ ist die Hydroxylzahl des Polyols in der Einheit [mmol OH / kg].

Die Hydroxylzahl ist ein Maß für den Gehalt an Hydroxygruppen in einem Polyol. Die Bestimmung der Hydroxylzahl erfolgt nach DIN 53240. Nach dieser Methode wird die Hydroxylzahl (OHZ) in der Einheit [mg KOH/g] angegeben. Sie entspricht der Menge KOH in [mg], welche der bei der Acetylierung von 1 g Polyol gebundenen Menge Essigsäure gleichwertig ist. Zum Zwecke der Vereinfachung der Rezepturberechnungen wird die Hydroxylzahl in dieser Schrift in die Einheit [mmol OH/kg] umgerechnet.

Dies erfolgt nach folgender Formel:

$$OHZ \ [mmol \ OH/kg] = OHZ \ [mg \ KOH/g] \times 1000/56,1.$$

56, 1 ist dabei die Molmasse von KOH.

Die Hydroxy-Funktionalität der Polyester-Polyole A von 1,8 bis 2 steht für einen hohen Grad an Difunktionalität, so dass auf diese Weise der Aufbau linearer Prepolymere ermöglicht wird.

Als Polyesterpolyole A kommen alle handelsüblichen aliphatischen Polyesterpolyole mit dem beschriebenen Molekulargewicht in Frage, sofern sie die beschriebene Hydroxy-Funktionalität aufweisen. Erfindungsgemäß einsetzbare Polyester-Polyole werden im Allgemeinen durch Polykondensation aus Diolen und Dicarbonsäuren gewonnen oder im Falle von Polycaprolacton-Polyolen durch Ringöffnungspolymerisation aus ε-Caprolacton und einem difunktionellem Startermolekül.

Vorzugsweise ist/sind zumindest eines der Polyester-Polyole A, stärker bevorzugt das Polyesterpolyol A bzw. die Polyesterpolyole A, das Produkt einer chemischen Reaktion von einer oder mehreren organischen Dicarbonsäure(n) ausgewählt aus der Gruppe bestehend aus Adipinsäure, Maleinsäure, Bernsteinsäure, Caprolactonen, Fumarsäure, Pimelinsäure, Suberinsäure und Glutarsäure; besonders bevorzugt ausgewählt aus der Gruppe bestehend aus Adipinsäure, Bernsteinsäure, Caprolactonen, Fumarsäure, Pimelinsäure, Suberinsäure und Glutarsäure; mit einem oder mehreren Diol(en) ausgewählt aus der Gruppe bestehend aus Ethylenglykol, Diethylenglykol, Triethylenglykol, 1,2-Propylenglykol, 1,3-Propandiol, 1,4-Butandiol, 1,6-Hexandiol, 3-Methyl-1,5-pentandiol, 2,2,4-Trimethyl-pentan-1,3-diol, 2-Butyl-2-ethyl-1,3-propandiol, 2,2-Dimethyl-1,3-propandiol, 2-Methyl-1,3-propandiol, 2-Ethyl-1,3-Hexandiol.

Besonders bevorzugt ist der Dicarbonsäure-Baustein der Polyester-Polyole Adipinsäure und/oder ε-Caprolacton. Bevorzugte Polyester-Polyole sind somit Polyadipat-Polyole und/oder Polycaprolacton-Polyole.
Der Alkohol-Baustein der Polyester-Polyole ist bevorzugt Ethylenglykol, Diethylenglykol, 1,4-Butandiol und/oder 1,6-Hexandiol. Besonders bevorzugt ist mindestens eines der Polyester-Polyole ein Polyadipat-Polyol, welches Ethylenglykol und/oder Diethylenglykol als Monomerbaustein enthält.

Es hat sich ferner herausgestellt, dass Methylgruppen tragende Polyester-Polyole, also Polyester-Polyole, die zum Beispiel 2-Methyl-1,3-Propandiol, 3-Methyl-1,5-Pentandiol oder Neopentylglykol als Alkohol-Baustein enthalten, zur Erzielung gewünschter Haftklebeleistungen vorteilhaft sein können, für eine schnelle biologische Abbaubarkeit der damit hergestellten Polyurethane aber eher nachteilig sind. Überraschenderweise lassen sich jedoch auch Polyurethane, die aus solche Bausteine enthaltenden Prepolymeren aufgebaut wurden, in Kombination mit den übrigen hierin beschriebenen Komponenten hinreichend schnell biologisch abbauen.

Vorzugsweise sind die Polyester-Polyole A aus erneuerbaren Rohstoffquellen, zum Beispiel durch Fermentation von Stärke oder Zucker, hergestellt.

Die Verbindungen B sind bevorzugt ausgewählt aus der Gruppe bestehend aus Polyesterdiolen mit einem zahlengemittelten Molekulargewicht von bis zu 600 g/mol, stärker bevorzugt von bis zu 450 g/mol; 2-Methyl-1,3-Propandiol, 3-Methyl-1,5-Pentandiol, Ethylenglykol, Diethylenglykol, Triethylenglykol, Tetraethylenglykol, Propylenglykol, Dipropylenglykol, Tripropylenglykol, 1,3-Propandiol, 1,3-Butandiol, 1,4-Butandiol, Neopentylglykol, 1,6-Hexandiol, 2-Ethyl-1,3-hexandiol und 2-Butyl-2-Ethyl-1,3-Propandiol. Besonders bevorzugt sind die Verbindungen B ausgewählt aus der Gruppe bestehend aus Polyesterdiolen mit einem zahlengemittelten Molekulargewicht von bis zu 450 g/mol, 2-Methyl-1,3-Propandiol (CAS-Nr.: 2163-42-0), 3-Methyl-1,5-Pentandiol (CAS-Nr.: 4457-71-0), Ethylenglykol (CAS-Nr.: 107-21-1), Diethylenglykol (CAS-Nr.: 111-46-6), Triethylenglykol (CAS-Nr.: 112-27-6) und Tetraethylenglykol (CAS-Nr.: 112-60-7). Insbesondere ist die Verbindung B Diethylenglykol und/oder ein Polyesterdiol mit einem zahlengemittelten Molekulargewicht von bis zu 450 g/mol.

Geeignete Diisocyanate C sind beispielsweise: Butan-1,4-diisocyanat, Tetramethoxybutan-1,4-diisocyanat, Hexan-1,6-diisocyanat, Ethylendiisocyanat, 2,2,4-Trimethyl-hexamethylendiisocyanat, Ethylethylendiisocyanat, Dicyclohexylmethandiisocyanat, 1,4-Diisocyanatocyclohexan, 1,3-Diisocyanatocyclohexan, 1,2-Diisocyanatocyclohexan, 1,3-Diisocyanatocyclopentan, 1,2-Diisocyanatocyclopentan, 1,2-Diisocyanatocyclobutan, 1-Isocyanatomethyl-3-isocyanato-1,5,5-trimethylcyclohexan (Isophorondiisocyanat), 1-Methyl-2,4-diisocyanato-cyclohexan, 1,6-Diisocyanato-2,2,4-trimethylhexan, 1,6-Diisocyanato-2,4,4-trimethylhexan, 5-Isocyanato-1-(2-isocyanatoeth-1-yl)-1,3,3-trimethyl-cyclohexan, 5-Isocyanato-1-(3-isocyanatoprop-1-yl)-1,3,3-trimethyl-cyclohexan, 5-Isocyanato-1-(4-isocyanatobut-1-yl)-1,3,3-trimethyl-cyclohexan, 1-Isocyanato-2-(3-isocyanatoprop-1-yl)-cyclohexan, 1-Isocyanato-2-(2-isocyanatoeth-1-yl)-cyclohexan, 2-Heptyl-3,4-bis(9-isocyanatononyl)-1 - pentyl-cyclohexan, Norbonandiisocyanatomethyl, hydrierte Diphenylmethandiisocyanate wie 4,4'-Diisocyanatodicyclohexylmethan, sowie chlorierte, bromierte, schwefel- oder phosphorhaltige aliphatische Diisocyanate.

Besonders bevorzugt sind die Diisocyanate C ausgewählt aus der Gruppe bestehend aus Isophorondiisocyanat, 4,4'-Diisocyanatodicyclohexylmethan und Hexan-1,6-diisocyanat.

Bevorzugt verläuft die chemische Reaktion, durch die das Polyurethan-Prepolymer erhältlich ist, in Gegenwart mindestens eines Bismutcarboxylat- oder Bismutcarboxylatderivat-haltigen Katalysators oder Katalysatorgemisches, dessen Verwendung zur Beschleunigung von Polyurethan-Reaktionen grundsätzlich bekannt ist. Ein derartiger Katalysator steuert die Haftklebeigenschaften des aus dem Prepolymer herzustellenden Polyurethans erheblich in der Weise, dass eine oberflächenspezifische Selektivität der Haftklebeigenschaften erreicht wird. Beispiele für entsprechende Katalysatoren sind Bismuttrisdodecanoat, Bismuttrisdecanoat, Bismuttrisneodecanoat, Bismuttrisoctanoat, Bismuttrisisooctanoat, Bismuttrishexanoat, Bismuttrispentanoat, Bismuttrisbutanoat, Bismuttrispropanoat und Bismuttrisacetat. Es können aber auch andere bekannte Katalysatoren eingesetzt werden wie zum Beispiel tertiäre Amine oder zinnorganische Verbindungen.

Das Verhältnis der Gesamtanzahl der Isocyanat-Gruppen zur Gesamtanzahl der Hydroxygruppen der an der chemischen Reaktion beteiligten Stoffe ist bevorzugt größer/gleich 0,7 und kleiner/gleich 0,9. Der Ausdruck "an der chemischen Reaktion beteiligte Stoffe" bezeichnet erfindungsgemäß sämtliche Reaktanden, die zum Zwecke der beabsichtigten chemischen Reaktion miteinander in Kontakt gebracht werden, unabhängig davon, ob die Moleküle der jeweiligen Substanzen tatsächlich sämtlich oder nur zum Teil abreagieren.

Bevorzugt beträgt das Stoffmengenverhältnis der Summe bzw. der Gesamtheit der Verbindungen B zu der Summe bzw. der Gesamtheit der Polyester-Polyole A 0,30 bis 2,33; besonders bevorzugt 0,45 bis 1,5 und insbesondere 0,5 bis 1.

Das durch chemische Vernetzung des Polyurethan-Prepolymers erhältliche Polyurethan ist sehr gut biologisch abbaubar. Aufgrund der hohen linearen Strukturanteile wäre zu erwarten gewesen, dass das Polyurethan überhaupt keine oder zumindest nur schwach ausgeprägte Haftklebeeigenschaften aufweisen würde. Überraschend hat sich jedoch gezeigt, dass das Polyurethan über einen breiten Bereich sehr gute Haftklebeeigenschaften aufweist.

Bevorzugt erfolgt die chemische Vernetzung zum Erhalt des Polyurethans mit mindestens einem Polyisocyanat D mit drei oder mehr Isocyanatgruppen. Das Verhältnis der Summe der Isocyanatgruppen aller Polyisocyanate C und D zur Summe der Hydroxygruppen der Komponenten A und B beträgt bevorzugt 0,9 bis 1,05.

Die chemische Vernetzung zum Erhalt des Polyurethans kann lösemittelfrei - also in der Schmelze -, in einem organischen Lösemittel oder in wässriger Dispersion erfolgen. In den beiden letzteren Fällen liegen sowohl das Polyurethan-Prepolymer als auch der Vernetzer, bevorzugt also das/die Polyisocyanat(e) D, in einem organischen Lösemittel gelöst bzw. in Wasser dispergiert vor. Um das Prepolymer besser in Wasser dispergieren zu können, stellt - wie im Stand der Technik bekannt - bevorzugt Dimethylolpropionsäure oder eine ähnlich aufgebaute Substanz zumindest einen Teil der Verbindung(en) B, wobei - wie ebenfalls im Stand der Technik bekannt - die Reaktion zum Aufbau des Prepolymers ohne Weiteres so geführt werden kann, dass nur die OH-Gruppen reagieren, die Carboxy-Funktion aber unbeteiligt bleibt.

Die Zusammensetzung enthält ein oder mehrere Polyurethan(e) zu mindestens 60 Gew.-%, bevorzugt zu mindestens 70 Gew.-%, besonders bevorzugt zu mindestens 80 Gew.-%, insbesondere zu mindestens 90 Gew.-%, ganz besonders bevorzugt zu mindestens 95 Gew.-%, beispielsweise zu mindestens 97 Gew.-%. Die Zusammensetzung ist ist als Haftklebemasse im erfindungsgemäßen Klebeband enthalten. Ein Vorteil der Zusammensetzung ist, dass sie - zumindest zu großen Teilen - im wässrigen Medium biologisch abbaubar und in einem standardisierten Kompost desintegrierbar ist.

Wie bereits dargelegt, ist das Polyurethan für sich genommen haftklebrig. Durch gezieltes Führen der Reaktionen zum Aufbau und zur Vernetzung des Polyurethan-Prepolymers lassen dich die Haftklebeeigenschaften des Polyurethans ein einem breiten Bereich einstellen. Zur Anpassung der Eigenschaften der Zusammensetzung kann das Polyurethan mit einem oder mehreren Additiven wie Klebrigmachern (Klebharzen), Weichmachern und/oder Alterungsschutzmitteln gemischt werden.

Vorzugsweise ist das Polyurethan jedoch frei von Klebrigmachern (Klebharzen) und Weichmachern, besonders bevorzugt frei von Klebrigmachern (Klebharzen), Weichmachern und Alterungsschutzmitteln und insbesondere frei von jeglichen Additiven. Produktions- oder anderweitig bedingte Rückstände beliebiger Substanzen, die im Wesentlichen aus einer nicht vollständigen Entfernung resultieren, sowie Substanzgehalte im Bereich einer Allgegenwartskonzentration sind hierbei unbeachtlich.

Unter der Bezeichnung "Klebharz", englisch "Tackifier Resins", versteht der Fachmann einen Stoff auf Harzbasis, der die Klebrigkeit erhöht.

Klebrigmacher sind beispielsweise Kohlenwasserstoffharze (zum Beispiel Polymere auf Basis ungesättigter $C_5$- oder $C_9$-Monomere), Terpenphenolharze, Polyterpenharze auf Basis von $\alpha$-Pinen und/oder $\beta$-Pinen und/oder $\delta$-Limonen, aromatische Harze wie Cumaron-Inden-Harze oder Harze auf Basis von Styrol oder $\alpha$-Methylstyrol sowie Kolophonium und seine Folgeprodukte, zum Beispiel disproportionierte, dimerisierte oder veresterte Harze, zum Beispiel Umsetzungsprodukte mit Glycol, Glycerin oder Pentaerythrit. Bevorzugt werden Naturharze wie Kolophoniumharze und dessen Derivate verwendet.

Der Zusatz von Klebrigmachern in geringfügigen Mengen bis zu 1 Gew.-% ist möglich, ohne dass die biologische Abbaubarkeit der Zusammensetzung verloren geht. Bei größeren Mengen, die der Zusammensetzung zugesetzt werden, ist es allerdings möglich, dass deren biologische Abbaubarkeit nicht mehr gegeben ist. Bevorzugt wird daher auf Klebrigmacher verzichtet.

Geeignete mischbare Weichmacher sind beispielsweise aliphatische und aromatische Mineralöle, Polyethylen- und Polypropylenglykol, Di- oder Poly-Ester der Phthalsäure, Citronensäure, Trimellitsäure oder Adipinsäure, flüssige Kautschuke (zum Beispiel niedermolekulare Nitril- oder Polyisoprenkautschuke), flüssige Polymerisate aus Buten und/oder Isobuten, Acrylsäureester, Polyvinylether, Flüssig- und Weichharze auf Basis der Rohstoffe von Klebharzen, Wollwachs und andere Wachse oder flüssige Silikone. Besonders bevorzugt werden Weichmacher aus nachwachsenden Rohstoffen verwendet wie zum Beispiel das biobasierte Polyoxytrimethylenglycol Cerenol® von DuPont, Pflanzenöle, vorzugsweise raffinierte Pflanzenöle wie zum Beispiel Rapsöl und Sojabohnenöl, Fettsäuren oder Fettsäureester oder epoxidierte Pflanzenöle, zum Beispiel epoxidiertes Sojabohnenöl.

Insbesondere werden biologisch abbaubare Weichmacher eingesetzt, vorzugsweise Di- oder Poly-Ester der Citronensäure oder der Adipinsäure.

Weiter vorzugsweise wird der Weichmacher, insbesondere der biologisch abbaubare, in Mengen von bis zu 10 Gew.-% (bezogen auf die Gesamtzusammensetzung), besonders bevorzugt in Mengen von bis zu 5 Gew.-% (bezogen auf die Gesamtzusammensetzung), ganz besonders bevorzugt in Mengen von bis zu 2,5 Gew.-% (bezogen auf die Gesamtzusammensetzung) eingesetzt.

Wie bei den Klebrigmachern ist der Zusatz von jeglichen Weichmachern in geringfügigen Mengen bis zu 1 Gew.-% möglich, ohne dass die biologische Abbaubarkeit der Zusammensetzung verloren geht. Auch hier gilt, dass es bei größeren Mengen, die der Zusammensetzung zugesetzt werden, möglich ist, dass deren biologische Abbaubarkeit nicht mehr gegeben ist.

Bevorzugt wird daher auf Weichmacher verzichtet, oder es werden biologisch abbaubare Weichmacher eingesetzt.

Weitere mögliche Additive in der Zusammensetzung sind Füllstoffe, zum Beispiel Fasern, Ruß, Zinkoxid, Titandioxid, Kreide, Voll- oder Hohlglaskugeln, Mikroballons, Mikrokugeln aus anderen Materialien, Kieselsäure, Silikate, Nanopartikel, Holzmehl, Stärke und Stärke-Compounds und andere biobasierte Füllstoffe; Compoundierungsmittel und/oder Alterungsschutzmittel, letztere zum Beispiel in Form von primären und sekundären Antioxidantien, beispielsweise sterisch gehinderte Phenole wie Irganox 1010 und besonders bevorzugt Tocopherol (Vitamin E). Auch Lichtschutzmittel können zugesetzt werden.

Bei den Additiven gilt das schon bei den Klebrigmachern und Weichmachern Gesagte: In geringfügigen Mengen bis zu 1 Gew.-% ist der Zusatz auch von biologisch nicht abbaubaren Füllstoffen möglich, ohne das die biologische Abbaubarkeit der Zusammensetzung wesentlich beeinträchtigt wird. Bei größeren Mengen, die dem Polyurethan zugesetzt werden, ist es möglich, dass die Zusammensetzung nicht mehr hinreichend biologisch abbaubar ist. Bevorzugt wird daher auf Füllstoffe, insbesondere auf nicht biologisch abbaubare, verzichtet. Biologisch abbaubare Füllstoffe hingegen können auch in größeren Mengen Verwendung finden.

Als Trägermaterialien für das Klebeband können die dem Fachmann geläufigen und üblichen Trägermaterialien wie Papier, Gewebe, Vlies oder Folien verwendet werden, letztere zum Beispiel aus Polyestern wie Polyethylenterephthalat (PET), Polyethylen, Polypropylen, verstrecktem Polypropylen oder Polyvinylchlorid. Besonders bevorzugt basiert das Trägermaterial auf nachwachsenden Rohstoffen wie Papier, Gewebe aus zum Beispiel Baumwolle, Hanf, Jurte, Brennesselfasern oder biobasierten und/oder biologisch abbaubaren Polymeren, beispielsweise Polymilchsäure. Diese Aufzählung ist nicht abschließend zu verstehen, vielmehr ist im Rahmen der Erfindung auch die Verwendung anderer Folien möglich.

Das Trägermaterial kann ein- oder beidseitig mit einer Haftklebemasse ausgerüstet sein. Im Falle einer beidseitigen Ausrüstung mit Haftklebemasse ist bevorzugt der Hauptbestandteil beider Haftklebemassen das hierin beschriebene Polyurethan. "Hauptbestandteil" bedeutet erfindungsgemäß, dass die betreffende Komponente den größten Gewichtsanteil aller Bestandteile der Haftklebemasse aufweist. Besonders bevorzugt ist die Haftklebemasse bzw. sind die Haftklebemassen eine hierin beschriebene Zusammensetzung. Insbesondere besteht die Haftklebemasse bzw. bestehen die Haftklebemassen aus dem hierin beschriebenen Polyurethan.

Das erfindungsgemäße Klebeband wird bevorzugt dadurch gebildet, dass auf den Träger partiell oder vollflächig die Haftklebemasse aufgetragen wird. Die Beschichtung kann auch in Form eines oder mehrerer Streifen in Längsrichtung (Maschinenrichtung) erfolgen, gegebenenfalls in Querrichtung, sie ist insbesondere aber vollflächig. Weiterhin kann die Haftklebemasse rasterpunktförmig mittels Siebdruck, wobei die Klebstoffpünktchen auch unterschiedlich groß und/oder unterschiedlich verteilt sein können, durch Tiefdruck in in Längs- und Querrichtung zusammenhängenden Stegen, durch Rasterdruck oder durch Flexodruck aufgebracht werden. Die Haftklebemasse kann in Kalottenform (hergestellt durch Siebdruck) vorliegen oder auch in einem anderen Muster wie Gitter, Streifen, Zickzacklinien. Ferner kann sie beispielsweise auch aufgesprüht sein, was ein unregelmäßiges Auftragsbild ergibt.

Der Stoffauftrag (Beschichtungsstärke) der Haftklebemasse liegt vorzugsweise zwischen 10 und 200 g/m$^2$, stärker bevorzugt zwischen 15 und 75 g/m$^2$ und besonders bevorzugt zwischen 20 und 50 g/m$^2$.

Vorteilhaft ist die Verwendung eines Haftvermittlers, einer so genannten Primerschicht, zwischen Trägermaterial und Haftklebemasse oder eine physikalische Vorbehandlung der Trägeroberfläche zur Verbesserung der Haftung der Klebemasse auf dem Trägermaterial. Der vorstehend beschriebene Auftrag der Haftklebemasse auf den Träger umfasst auch den Auftrag auf einen mit einer Primerschicht versehenenTräger.

Als Primer sind die bekannten Dispersions- und Lösungsmittelsysteme verwendbar, zum Beispiel solche auf Basis von Isopren- oder Butadien-haltigem Kautschuk, Acrylatkautschuk, Polyvinyl-, Polyvinyliden- und/oder Cyclokautschuk. Isocyanate oder Epoxyharze als Additive verbessern die Haftung und erhöhen zum Teil auch vorteilhaft die Scherfestigkeit des Haftklebstoffes. Der Haftvermittler kann ebenfalls mittels einer Coextrusionsschicht auf die Trägerfolie aufgebracht werden. Als physikalische Oberflächenbehandlungen eigenen sich zum Beispiel Beflammung, Corona und Plasma.

Des Weiteren kann das Trägermaterial rück- oder oberseitig, also der Klebstoffseite gegenüberliegend, einer antiadhäsiven physikalischen Behandlung oder Beschichtung unterzogen sein, insbesondere mit einem Trennmittel oder Release (gegebenenfalls mit anderen Polymeren abgemischt) ausgerüstet sein.

Beispiele für Trenn- oder - synonym bezeichnet - Releaseschichten sind solche aus Stearyl-Verbindungen (zum Beispiel Polyvinylstearylcarbamat, Stearylverbindungen von Übergangsmetallen wie Cr oder Zr, Harnstoffe aus Polyethylenimin und Stearylisocyanat) oder Polysiloxanen. Der Begriff "Stearyl" steht als Synonym für alle geraden oder verzweigten Alkyle oder Alkenyle mit einer C-Zahl von mindestens 10 wie zum Beispiel Octadecyl.

Geeignete Trennmittel umfassen weiterhin tensidische Releasesysteme auf Basis langkettiger Alkylgruppen wie Stearylsulfosuccinate oder Stearylsulfosuccinamate, aber auch Polymere, die ausgewählt sind aus der Gruppe bestehend aus Polyvinylstearylcarbamaten, zum Beispiel Escoat 20 von der Firma Mayzo, Polyethyleniminstearylcarbamiden, Chrom-Komplexen von $C_{14}$- bis $C_{28}$-Fettsäuren und Stearyl-Copolymeren, wie sie zum Beispiel in DE 28 45 541 A beschrieben sind. Ebenfalls geeignet sind Trennmittel auf Basis von Acrylpolymeren mit perfluorierten Alkylgruppen, Silikone, zum Beispiel auf Basis von Poly(dimethyl-Siloxanen), und Fluorsilikonverbindungen.

Weiter kann das Trägermaterial vor- beziehungsweise nachbehandelt werden. Gängige Vorbehandlungen sind Hydrophobieren, geläufige Nachbehandlungen sind Kalandern, Tempern, Kaschieren, Stanzen und Eindecken.

Das Klebeband kann mit einer handelsüblichen Trennfolie bzw. einem Trennpapier laminiert sein, die bzw. das üblicherweise aus einem Basismaterial aus Polyethylen, Polypropylen, Polyester oder Papier aufgebaut ist, das ein- oder doppelseitig mit Polysiloxan beschichtet ist. Ein solches Gebilde wird vielfach auch als Releaseliner bezeichnet.

Die Herstellung des erfindungsgemäßen Klebebands kann durch übliche, dem Fachmann bekannte Beschichtungsverfahren erfolgen. Hierbei kann das Polyurethan, ggf. inklusive der Additive, gelöst in einem geeigneten Lösemittel mittels beispielsweise Rasterwalzenauftrag, Kommarakelbeschichtung, Mehrwalzenbeschichtung oder in einem Druckverfahren auf eine Trägerfolie oder Trennfolie beschichtet und anschließend das Lösemittel in einem Trockenkanal oder -ofen entfernt werden. Alternativ kann die Beschichtung der Trägerfolie oder Trennfolie auch in einem lösemittelfreien Verfahren erfolgen. Hierzu wird das Polyurethan in einem Extruder hergestellt. In dem Extruder können weitere Prozessschritte wie das Mischen mit den beschriebenen Additiven, Filtration oder eine Entgasung erfolgen. Die Schmelze wird dann mittels einer Breitschlitzdüse auf die Trägerfolie oder Trennfolie beschichtet.

Das erfindungsgemäße Klebeband hat vorzugsweise eine Klebkraft auf einem Stahluntergrund von mindestens 1,0 N/cm und eine Scherdeformation von maximal 500 $\mu$m bei einem Stoffauftrag von 25 g/m$^2$. Diese Werte werden bevorzugt auch nach einer Lagerung von 3 Monaten bei 23 °C, 40 °C oder 70 °C erreicht.

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen. Das Klebeband kann in festen Längen wie zum Beispiel als Meterware oder aber als Endlosware auf Rollen (archimedische Spirale) zur Verfügung gestellt werden. Das Klebeband kann nur aus einer Schicht Klebstoff bestehen, also einlagig sein, das Klebeband kann aber auch einen Träger aufweisen, auf den ein- oder beidseitig eine Schicht oder gegebenenfalls mehrere Schichten Klebstoff aufgebracht ist.

Der Gesamtgehalt an nachwachsenden Rohstoffen im erfindungsgemäßen Klebeband inklusive Releaseliner beträgt vorzugsweise mindestens 50 Gew.-%.

Offenbart wird auch die Verwendung eines hierin beschriebenen Polyurethans zur Herstellung einer Haftklebemasse oder eines Haftstoffes.

Beispiele:

Das Polyurethan-Prepolymer wurde jeweils hergestellt, indem zunächst das/die PolyesterPolyol(e) A eingewogen und in einem üblichen beheiz- und evakuierbaren Labormischer (zum Beispiel von der Firma PC Laborsystem) unter Vakuum bei einer Temperatur von 70 °C ca. zwei Stunden lang gemischt wurden. Sodann wurde(n) das/die Diol(e) B zugegeben und 20 Minuten lang ohne Vakuum eingemischt. Anschließend wurden ggf. die restlichen Stoffe entsprechend den in den einzelnen Beispielen angegebenen Mengenverhältnissen zugefügt und 20 Minuten eingemischt. Zuletzt erfolgte die Zugabe des mindestens einen Diisocyanats C, das 20 Minuten lang homogen eingemischt wurde. Die chemisch reagierende Mischung wurde zur Vervollständigung der Umsetzung 7 Tage lang bei 40 °C im Wärmeschrank gelagert.

Zur Vernetzung wurde das hergestellte Polyurethan-Prepolymer zunächst in Aceton gelöst. Pro 100 g Prepolymer wurden stets 25 g Aceton zugefügt. Es wurde mit Desmodur® N3300 (Polyisocyanat D) vernetzt.
Nach der Zugabe des Desmodur® N3300 zum in Aceton gelösten Polyurethan-Prepolymer wurde die Mischung 5 Minuten gerührt. Anschließend wurde die chemisch reagierende Mischung während der Reaktionsphase auf einem handelsüblichen Laborstreichtisch (zum Beispiel von der Firma SMO (Sondermaschinen Oschersleben GmbH)) mit Hilfe eines Streichmessers auf eine 23 $\mu$m dicke, mit Trichloressigsäure geätzte PET-Folie beschichtet. Das Aceton wurde bei 60 °C im Umlufttrockenschrank 10 Minuten abgedampft. Die Spaltbreite beim Beschichten wurde so eingestellt, dass nach dem Abdampfen des Lösemittels ein 25 $\mu$m dicker haftklebriger Film erhalten wurde. Anschließend wurden die vom Lösemittel befreiten Filme mit silikonisierter PET-Folie abgedeckt und zur Vervollständigung der Umsetzung 7 Tage lang bei 40 °C im Wärmeschrank gelagert.

In Tabelle 1 sind die zur Herstellung der Prepolymere und Zusammensetzungen verwendeten Stoffe aufgeführt. Die genannten Rohstoffe sind alle frei im Handel erhältlich.

Tabelle 1: Zur Herstellung der beispielhaften Muster verwendete Materialien

| Handelsname | Chemische Bezeichnung/ Beschreibung | Zahlengemittelte s Molekulargewicht $M_n$ | OH- bzw. NCO-Zahl (mmol OH/kg bzw. mmol NCO/kg) | Funktionalität (f) | Hersteller/ Lieferant |
|---|---|---|---|---|---|
| Diole | | | | | |
| Capa 2043 ® | Polycaprolacton-Diol, Basis: 1,4-Butandiol (Starter), Caprolacton | 400 | 4991 | 2 | Perstorp |
| Desmophen 1652 ® | Polyester-Diol auf Basis 1,4-Butandiol, Ethylenglykol, Diethylenglykol, Adipinsäure | 2120 | 941 | 2 | Bayer |
| MP Diol® | 2-Methyl-1,3-Propandiol (CAS-Nr.: 2163-42-0) | 90,12 | 22193 | 2 | Lyondel |
| Katalysator | | | | | |
| Coscat 83 ® | Bismuttrisneodecanoat, CAS-Nr.: 34364-26-6 | | | | Caschem |
| Isocyanate | | | | | |
| IDPI | Isophorondiisocyanat (CAS-Nr.: 4098-71-9 ) | 222,28 | 8998 | 2 | Sigma-Aldrich |
| Hexamethylendiisocyanat | Hexamethylendiisocyanat (CAS-Nr.: 822-06-0) | 168 | 11891 | 2 | Sigma-Aldrich |
| Desmodur N 3300 ® | HDI-Trimer mit höher funktionellen Anteilen | ca. 680 | 5190 | ca. 3,4 | Bayer |

Prüfmethoden

Die Messungen werden, wenn nicht anders angegeben, bei einem Prüfklima von 23 ± 1 °C und 50 ± 5 % rel. Luftfeuchte durchgeführt.

Die folgenden Prüfmethoden wurden eingesetzt, um die Ausgangsstoffe sowie die nach den beschriebenen Verfahren hergestellten Muster zu charakterisieren.

Molekulargewicht $M_n$

Die Bestimmung der zahlengemittelten mittleren Molekulargewichte $M_n$ erfolgt erfindungsgemäß mittels Gelpermeationschromatographie (GPC). Als Eluent wird THF (Tetrahydrofuran) mit 0,1 Vol.-% Trifluoressigsäure eingesetzt. Die Messungen erfolgen bei 25 °C. Als Vorsäule wird PSS-SDV, 5 μ, $10^3$ Å, ID 8,0 mm x 50 mm verwendet. Zur Auftrennung werden die Säulen PSS-SDV, 5 μ, $10^3$ sowie $10^5$ und $10^6$ mit jeweils ID 8,0 mm x 300 mm eingesetzt. Die Probenkonzentration beträgt 4 g/l, die Durchflussmenge 1,0 ml pro Minute. Es wird gegen PMMA-Standards gemessen.

Hydroxylzahl

Die Bestimmung der Hydroxylzahlen erfolgt nach DIN 53240. Nach dieser Methode wird die Hydroxylzahl (OHZ) in der Einheit [mg KOH/g] angegeben. Zum Zwecke der Vereinfachung der Rezepturberechnungen in den aufgeführten Beispielen wurden die Hydroxylzahlen in die Einheit [mmol OH/kg] umgerechnet. Dies erfolgte nach folgender Formel:

$$OHZ \text{ [mmol OH/kg]} = OHZ \text{[mg KOH/g]} \times 1000/56{,}1$$

56, 1 ist dabei die Molmasse von KOH.

Hydroxy-Funktionalität (f)

Die Hydroxy-Funktionalität (f) wird aus dem zahlengemittelten, mittleren Molekulargewicht $M_n$ und der OH-Zahl (OHZ) nach folgender Gleichung errechnet:

$$f = M_n \text{[g/mol]} \times OHZ \text{ [mmol OH/kg]}/10^6.$$

Klebkraft

Die Prüfung der Klebkraft (Schälfestigkeit) erfolgte in Anlehnung an PSTC-1. Ein 2 cm breiter Streifen des Haftklebbandes, bestehend aus der 23 μm dicken, mit Trichloressigsäure geätzten PET-Folie und dem darauf aufgetragenen 25 μm dicken haftklebrigen Film, wurde auf der Prüfplatte durch fünfmaliges doppeltes Überrollen mittels einer 5 kg Rolle verklebt. Die Prüfplatte wurde eingespannt und der Selbstklebstreifen über sein freies Ende mittels einer Zugprüfmaschine unter einem Schälwinkel von 180° mit einer Geschwindigkeit von 300 mm/min abgezogen. Die dafür notwendige Kraft wurde ermittelt. Die Messergebnisse wurden über drei Messungen gemittelt und normiert auf die Breite des Streifens in N/cm angegeben. Bei den Prüfplatten handelte es sich um Stahl- und ABS-Platten.

Die Klebkraftmessungen erfolgten mit frisch verklebten Proben und mit Proben, die nach Durchführung der Verklebungen in einer Klimakammer gelagert wurden. Die Lagerbedingungen waren 3 Wochen bei 60 °C.

Mikrosch ertest

Dieser Test dient der Schnellprüfung der Scherfestigkeit von Klebebändern unter Temperaturbelastung.

Messprobenpräparation für Mikroschertest:

Ein aus dem jeweiligen Probenmuster geschnittenes Klebeband (Länge ca. 50 mm, Breite 10 mm) wurde auf eine mit Aceton gereinigte Stahl-Prüfplatte verklebt, so dass die Stahlplatte das Klebeband rechts und links überragte und dass das Klebeband die Prüfplatte am oberen Rand um 2 mm überragte. Die Verklebungsfläche der Probe betrug Höhe x Breite = 13 mm x 10 mm. Die Verklebungsstelle wurde anschließend mit einer 2 kg-Stahlrolle und einer Geschwindigkeit von 10 m/min sechsmal überrollt. Das Klebeband wurde bündig mit einem stabilen Klebestreifen verstärkt, der als Auflage für den Wegmessfühler diente. Die Probe wurde mittels der Prüfplatte senkrecht aufgehängt.

Mikroschertest:

Das zu messende Probenmuster wurde am unteren Ende mit einem Gewicht von 500 g belastet. Die Prüftemperatur betrug 40 °C, die Prüfdauer 30 Minuten (15 Minuten Belastung und 15 Minuten Entlastung). Die Scherstrecke nach der vorgegebenen Testdauer bei konstanter Temperatur wurde als Ergebnis in μm angegeben, und zwar als Maximalwert ["max"; maximale Scherstrecke durch 15 minütige Belastung] und als Minimalwert ["min"; Scherstrecke ("Restauslenkung") 15 min nach Entlastung; bei Entlastung erfolgt eine Rückbewegung durch Relaxation]. Angegeben wurde ebenfalls der elastische Anteil in Prozent ["elast"; elastischer Anteil = (max - min)- 100 / max].

Bestimmung der biologischen Abbaubarkeit

Die biologische Abbaubarkeit durch Kompostierung wurde nach DIN EN 13432 bestimmt Dabei handelt es sich um eine chemische Prüfung, bei der innerhalb der sechsmonatigen Prüfdauer ein Abbaugrad von 90 % relativ zu einer Referenzsubstanz in Gegenwart von Mikroorganismen oder Pilzen erreicht werden muss. Dabei sind die Bedingungen (Temperatur, Sauerstoff- und Feuchtigkeitsgehalt) genau definiert. Der Abbau muss zu Wasser, Kohlenstoffdioxid und Biomasse erfolgen. Es folgt eine chemische Untersuchung und Bewertung der Qualität des Komposts. Ebenfalls erfolgt im Rahmen dieser Untersuchung eine Prüfung auf das Desintegrationsverhalten. Die Desintegration weist auf die physikalische Zerlegung eines Materials in sehr kleine Fragmente hin. Dabei müssen mindestens 90 % des Kunststoffs innerhalb von 12 Wochen zu Partikeln kleiner als 2 mm abgebaut sein. Nur wenn beide Tests erfüllt sind, gilt ein Stoff nach der DIN-Norm als biologisch abbaubar.

Wegen des hohen Aufwandes und der daraus resultierenden hohen Kosten erfolgte diese Prüfung nur an einigen ausgewählten Beispielen.

Bestimmung des Desintegrationsverhaltens

Bei allen Prüfmustern erfolgte separat die Prüfung des Desintegrationsverhaltens in Anlehnung an DIN EN ISO 20200.

Diese Norm beschreibt die Bestimmung der Desintegrierbarkeit (des Zersetzungsgrades) von Polymeren unter nachgebildeten Kompostierungsbedingungen im Labormaßstab.

Für die Untersuchungen wurde handelsübliche Komposterde verwendet, hier die Komposterde mit der Markenbezeichnung tangocomp® der VKN-Vertriebsgesellschaft Kompostprodukte Nord mbH. Die Vertriebsgesellschaft ist in Tangstedt, Schleswig-Holstein ansässig und bezieht ihre Kompostrohstoffe aus der Umgebung von Hamburg. Der Feuchtegehalt der Komposterde wurde auf 55 bis 60 % eingestellt. Zur Bestimmung des Feuchtegehaltes wurden drei Proben Komposterde à 10 g für 2 Stunden bei 120 °C getrocknet und anschließend der Feuchtigkeitsverlust und somit der Wassergehalt der Erde bestimmt. Fehlende Feuchtigkeit wurde in Form von nicht gechlortem Leitungswasser aufgefüllt.

In einen 250 mL PE-Becher wurden zunächst 50 g der auf einen Feuchtegehalt von 60 % eingestellten Komposterde eingewogen. Auf diese erste Erdschicht wurde anschließend ein ca. 9 cm$^2$ großes Stück der zu untersuchenden Probe gegeben. Auf die Probe wurde sodann eine zweite Schicht Komposterde von ebenfalls 50 g Gewicht gegeben. Der PE-Becher wurde mit einem Deckel verschlossen. Zur Belüftung des Komposts wurde der Deckel zuvor mit 3 Löchern mit einem Durchmesser von jeweils 2,0 mm versehen. Die so vorbereitete Probe wurde bei 58 ± 2 °C für maximal 90 Tage gelagert und der Wasserverlust alle 2 bis 3 Tage durch Wasserzugabe ausgeglichen. Einmal wöchentlich wurde der Fortschritt der Zersetzung der Proben durch optische Prüfung festgestellt und die Zeit bis zur kompletten Zersetzung (Desintegrationszeit) dokumentiert.

Beispiel 1

Das Polyurethan-Prepolymer 1 setzt sich wie folgt zusammen:

| Rohstoff | Einwaage [g] | Menge der eingebrachten OH- beziehungsweise NCO-Gruppen |
|---|---|---|
| Desmophen 1652 ® | 86,8 | 81,7 mmol OH |
| MP Diol ® | 1,9 | 44,4 mmol OH |
| Coscat 83 ® | 0,1 | |
| IPDI | 11,2 | 100,8 mmol NCO |

(fortgesetzt)

| Rohstoff | Einwaage [g] | Menge der eingebrachten OH- beziehungsweise NCO-Gruppen |
|---|---|---|
| Summe | 100,0 | |
| NCO : OH = 0,8 | | |

Vernetzungsschritt

Beispiel 1a:

| Rohstoff | Eingesetzte Masse [g] | Menge eingebrachter OH- beziehungsweise NCO-Gruppen (Annahme vollständigen NCO-Umsatzes bei der Prepolymer-Herstellung) |
|---|---|---|
| Prepolymer 1 | 100,0 | 25,3 mmol OH |
| Aceton | 25,0 | |
| Desmodur N 3300 ® | 4,0 | 20,8 mmol NCO |
| NCO : OH = 0,82 | | |

Beispiel 1b:

| Rohstoff | Eingesetzte Masse [g] | Menge eingebrachter OH- beziehungsweise NCO-Gruppen (Annahme vollständigen NCO-Umsatzes bei der Prepolymer-Herstellung) |
|---|---|---|
| Prepolymer 1 | 100,0 | 25,3 mmol OH |
| Aceton | 25,0 | |
| Desmodur N 3300 ® | 5,0 | 26,0 mmol NCO |
| NCO : OH = 1,03. | | |

Beispiel 2

Das Polyurethan-Prepolymer 2 setzt sich wie folgt zusammen:

| Rohstoff | Einwaage [g] | Menge der eingebrachten OH- beziehungsweise NCO-Gruppen |
|---|---|---|
| Desmophen 1652 ® | 88,7 | 83,6 mmol OH |
| MP Diol ® | 1,3 | 28,9 mmol OH |
| Coscat 83 ® | 0,1 | |
| IPDI | 9,9 | 89,1 mmol NCO |
| Summe | 100,0 | |
| NCO : OH = 0,8 | | |

Vernetzungsschritt

Beispiel 2a:

| Rohstoff | Eingesetzte Masse [g] | Menge eingebrachter OH- beziehungsweise NCO-Gruppen (Annahme vollständigen NCO-Umsatzes bei der Prepolymer-Herstellung) |
|---|---|---|
| Prepolymer 2 | 100,0 | 23,4 mmol OH |
| Aceton | 25,0 | |
| Desmodur N 3300 ® | 4,0 | 20,8 mmol NCO |
| NCO : OH = 0,89. | | |

Beispiel 2b:

| Rohstoff | Eingesetzte Masse [g] | Menge eingebrachter OH- beziehungsweise NCO-Gruppen (Annahme vollständigen NCO-Umsatzes bei der Prepolymer-Herstellung) |
|---|---|---|
| Prepolymer 2 | 100,0 | 23,4 mmol OH |
| Aceton | 25,0 | |
| Desmodur N 3300 ® | 5,0 | 26,0 mmol NCO |
| NCO : OH = 1,11. | | |

Beispiel 3

Das Polyurethan-Prepolymer 3 setzt sich wie folgt zusammen:

| Rohstoff | Einwaage [g] | Menge der eingebrachten OH- beziehungsweise NCO-Gruppen |
|---|---|---|
| Desmophen 1652 ® | 85,6 | 80,5 mmol OH |
| MP Diol ® | 1,9 | 44,4 mmol OH |
| Coscat 83 ® | 0,1 | |
| IPDI | 12,4 | 111,6 mmol NCO |
| Summe | 100,0 | |
| NCO : OH =0,9. | | |

Vernetzungsschritt:

Beispiel 3a:

| Rohstoff | Eingesetzte Masse [g] | Menge eingebrachter OH- beziehungsweise NCO-Gruppen (Annahme vollständigen NCO-Umsatzes bei der Prepolymer-Herstellung) |
|---|---|---|
| Prepolymer 3 | 100,0 | 13,3 mmol OH |
| Aceton | 25,0 | |
| Desmodur N 3300 ® | 4,0 | 20,8 mmol NCO |
| NCO : OH = 1,56. | | |

Beispiel 3b:

| Rohstoff | Eingesetzte Masse [g] | Menge eingebrachter OH- beziehungsweise NCO-Gruppen (Annahme vollständigen NCO-Umsatzes bei der Prepolymer-Herstellung) |
|---|---|---|
| Prepolymer 3 | 100,0 | 13,3 mmol OH |
| Aceton | 25,0 | |
| Desmodur N 3300 ® | 5,0 | 26,0 mmol NCO |
| NCO : OH = 1,95. | | |

Beispiel 4

Das Polyurethan-Prepolymer 4 setzt sich wie folgt zusammen:

| Rohstoff | Einwaage [g] | Menge der eingebrachten OH- beziehungsweise NCO-Gruppen |
|---|---|---|
| Desmophen 1652 ® | 83,3 | 78,5 mmol OH |
| Capa 2043 | 8,5 | 42,4 mmol OH |
| Coscat 83 ® | 0,1 | |
| HDI | 8,1 | 96,3 mmol NCO |
| Summe | 100,0 | |
| NCO : OH = 0,8. | | |

Vernetzungsschritt:

Beispiel 4a:

| Rohstoff | Eingesetzte Masse [g] | Menge eingebrachter OH- beziehungsweise NCO-Gruppen (Annahme vollständigen NCO-Umsatzes bei der Prepolymer-Herstellung) |
|---|---|---|
| Prepolymer 4 | 100,0 | 24,6 mmol OH |
| Aceton | 25,0 | |

(fortgesetzt)

| Rohstoff | Eingesetzte Masse [g] | Menge eingebrachter OH- beziehungsweise NCO-Gruppen (Annahme vollständigen NCO-Umsatzes bei der Prepolymer-Herstellung) |
|---|---|---|
| Desmodur N 3300 ® | 4,0 | 20,8 mmol NCO |
| NCO : OH = 0,85. | | |

Beispiel 4b:

| Rohstoff | Eingesetzte Masse [g] | Menge eingebrachter OH- beziehungsweise NCO-Gruppen (Annahme vollständigen NCO-Umsatzes bei der Prepolymer-Herstellung) |
|---|---|---|
| Prepolymer 4 | 100,0 | 24,6 mmol OH |
| Aceton | 25,0 | |
| Desmodur N 3300 ® | 5,0 | 26,0 mmol NCO |
| NCO : OH = 1,06. | | |

Beispiel 5

Das Polyurethan-Prepolymer 5 setzt sich wie folgt zusammen:

| Rohstoff | Einwaage [g] | Menge der eingebrachten OH- beziehungsweise NCO-Gruppen |
|---|---|---|
| Desmophen 1652 ® | 79,7 | 75,0 mmol OH |
| MP Diol® | 2,4 | 53,3 mmol OH |
| Capa 2043 ® | 4,5 | 22,5 mmol OH |
| Coscat 83 ® | 0,1 | |
| IPDI | 13,3 | 119,7 mmol NCO |
| Summe | 100,0 | |
| NCO : OH = 0,8. | | |

Vernetzungsschritt:

Beispiel 5a:

| Rohstoff | Eingesetzte Masse [g] | Menge eingebrachter OH- beziehungsweise NCO-Gruppen (Annahme vollständigen NCO-Umsatzes bei der Prepolymer-Herstellung) |
|---|---|---|
| Prepolymer 5 | 100,0 | 31,1 mmol OH |
| Aceton | 25,0 | |
| Desmodur N 3300 ® | 4,0 | 20,8 mmol NCO |
| NCO : OH = 0,67. | | |

Beispiel 5b:

| Rohstoff | Eingesetzte Masse [g] | Menge eingebrachter OH- beziehungsweise NCO-Gruppen (Annahme vollständigen NCO-Umsatzes bei der Prepolymer-Herstellung) |
|---|---|---|
| Prepolymer 5 | 100,0 | 31,1 mmol OH |
| Aceton | 25,0 | |
| Desmodur N 3300 ® | 5,0 | 26,0 mmol NCO |
| NCO : OH = 0,84. | | |

Beispiel 6

Das Polyurethan-Prepolymer 6 setzt sich wie folgt zusammen:

Prepolymer 6:

| Rohstoff | Einwaage [g] | Menge der eingebrachten OH- beziehungsweise NCO-Gruppen |
|---|---|---|
| Desmophen 1652 ® | 86,8 | 82,7 mmol OH |
| MP Diol® | 1,9 | 44,4 mmol OH |
| Coscat 83 ® | 0,1 | |
| IPDI | 11,2 | 100,8 mmol NCO |
| Summe | 100,0 | |
| NCO : OH =0,8. | | |

Vernetzungsschritt:

Beispiel 6a:

| Rohstoff | Eingesetzte Masse [g] | Menge eingebrachter OH- beziehungsweise NCO-Gruppen (Annahme vollständigen NCO-Umsatzes bei der Prepolymer-Herstellung) |
|---|---|---|
| Prepolymer 6 | 100,0 | 26,3 mmol OH |
| Aceton | 25,0 | |
| Desmodur N 3300 ® | 4,0 | 20,8 mmol NCO |
| NCO : OH = 0,79. | | |

Beispiel 6b:

| Rohstoff | Eingesetzte Masse [g] | Menge eingebrachter OH- beziehungsweise NCO-Gruppen (Annahme vollständigen NCO-Umsatzes bei der Prepolymer-Herstellung) |
|---|---|---|
| Prepolymer 6 | 100,0 | 26,3 mmol OH |
| Aceton | 25,0 | |
| Desmodur N 3300 ® | 5,0 | 26,0 mmol NCO |
| NCO : OH = 0,99. | | |

Vergleichsbeispiele

Prepolymer 7:

| Rohstoff | Einwaage [g] | Menge der eingebrachten OH- beziehungsweise NCO-Gruppen |
|---|---|---|
| Desmophen 1652 ® | 93,9 | 88,4 mmol OH |
| MP Diol® | 2,0 | 44,4 mmol OH |
| Coscat 83 ® | 0,1 | |
| IPDI | 4,0 | 36,0 mmol NCO |
| Summe | 100,0 | |
| NCO : OH = 0,3. | | |

Vernetzungsschritt:

Beispiel 7a:

| Rohstoff | Eingesetzte Masse [g] | Menge eingebrachter OH- beziehungsweise NCO-Gruppen (Annahme vollständigen NCO-Umsatzes bei der Prepolymer-Herstellung) |
|---|---|---|
| Prepolymer 7 | 100,0 | 26,3 mmol OH |
| Aceton | 25,0 | |
| Desmodur N 3300 ® | 17,6 | 91,5 mmol NCO |
| NCO : OH = 0,95. | | |

Prepolymer 8:

| Rohstoff | Einwaage [g] | Menge der eingebrachten OH- beziehungsweise NCO-Gruppen |
|---|---|---|
| Capa 2043 | 52,4 | 261,5 mmol OH |
| MP Diol ® | 6,6 | 146,5 mmol OH |
| Coscat 83 ® | 0,3 | |

(fortgesetzt)

| Rohstoff | Einwaage [g] | Menge der eingebrachten OH- beziehungsweise NCO-Gruppen |
|---|---|---|
| IPDI | 40,7 | 366,2 mmol NCO |
| Summe | 100,0 | |
| NCO : OH = 0,9. | | |

Vernetzungsschritt:

Beispiel 8a:

| Rohstoff | Eingesetzte Masse [g] | Menge eingebrachter OH- beziehungsweise NCO-Gruppen (Annahme vollständigen NCO-Umsatzes bei der Prepolymer-Herstellung) |
|---|---|---|
| Prepolymer 3 | 100,0 | 41,8 mmol OH |
| Aceton | 25,0 | |
| Desmodur N 3300 ® | 4,9 | 25,5 mmol NCO |
| NCO : OH = 0,61. | | |

Ergebnisse

| Beispiel/ Probe | Klebkraft (Stahl) [N/cm] | Klebkraft (ABS) [N/cm] | max. Mikroscherweg (Stahl) 40 °C, 500 g, 15 min Belastung, [μm] | Klebkraft (ABS) nach 3 Wochen 60 °C-Lagerung [N/cm] | Biologische Abbaubarkeit nach DIN EN 13432 | Desintegrations -zeit [Tage] |
|---|---|---|---|---|---|---|
| 1a | 1,9 | 2,1 | 60 | 4,5 | erfüllt | 51 |
| 1b | 0,5 | 1,2 | 14 | 3,5 | erfüllt | 65 |
| 2a | 2,1 | 2,3 | 68 | 4,5 | erfüllt | 54 |
| 2b | 0,6 | 1,3 | 23 | 3,4 | erfüllt | 71 |
| 3a | 0,2 | 1,2 | 51 | 3,5 | erfüllt | 72 |
| 3b | 0,2 | 0,8 | 12 | 2,8 | erfüllt | 88 |
| 4a | 0,8 | 1,8 | 51 | 4,9 | erfüllt | 37 |
| 4b | 0,2 | 0,9 | 18 | 3,7 | erfüllt | 44 |
| 5a | 4,8 | 4,6 | 299 | 5,7 | erfüllt | 52 |
| 5b | 3,2 | 3,5 | 63 | 4,9 | erfüllt | 63 |
| 6a | 3,4 | 4,5 | 117 | 5,3 | erfüllt | 52 |
| 6b | 1,8 | 3,2 | 21 | 5,1 | erfüllt | 70 |
| 7a | 0,1 | 0,2 | nicht bestimmt | | nicht abbaubar | >180 |
| 8a | kein Haftklebstoff | | | | erfüllt | 42 |

Bei allen Klebkraftmessungen mit den erfindungsgemäßen Beispielen waren die Bruchbilder stets adhäsiv. Es wurden keine Beläge und keine Verfärbungen auf den Prüfplatten beobachtet.

**Patentansprüche**

1. Klebeband, umfassend
mindestens ein Trägermaterial und
mindestens eine Zusammensetzung, enthaltend zu insgesamt mindestens 60 Gew.-% ein oder mehrere Polyurethane, erhältlich durch chemische Vernetzung eines Polyurethan-Prepolymers, erhältlich durch chemische Reaktion von

a) einem oder mehreren aliphatischen Polyester-Polyolen A mit einer Hydroxy-Funktionalität von 1,8 bis einschließlich 2 und einem zahlengemittelten Molekulargewicht von gleich/größer 1000 g/mol;
b) einer oder mehreren Verbindungen B mit einer Hydroxy-Funktionalität von 1,8 bis einschließlich 2 und einem zahlengemittelten Molekulargewicht von kleiner 1000 g/mol;
c) einem oder mehreren aliphatischen Diisocyanaten C;

wobei das Verhältnis der Gesamtanzahl der Isocyanat-Gruppen zur Gesamtanzahl der Hydroxygruppen der an der chemischen Reaktion beteiligten Stoffe größer/gleich 0,4 und kleiner 1 ist,
als Haftklebemasse.

2. Klebeband gemäß Anspruch 1, **dadurch gekennzeichnet, dass** das Molekulargewicht der Polyester-Polyole A größer 1500 g/mol ist.

3. Klebeband gemäß einem der Ansprüche 1 und 2, **dadurch gekennzeichnet, dass** das Verhältnis der Gesamtanzahl der Isocyanat-Gruppen zur Gesamtanzahl der Hydroxygruppen der an der chemischen Reaktion beteiligten Stoffe größer/gleich 0,7 und kleiner/gleich 0,9 ist.

4. Klebeband gemäß mindestens einem der vorstehenden Ansprüche, **dadurch gekennzeichnet, dass** zumindest eines der Polyester-Polyole A das Produkt einer chemischen Reaktion von

- einer oder mehreren organischen Dicarbonsäuren ausgewählt aus der Gruppe bestehend aus Adipinsäure, Bernsteinsäure, Caprolactonen, Fumarsäure, Pimelinsäure, Suberinsäure und Glutarsäure mit
- einem oder mehreren Diolen, ausgewählt aus der Gruppe bestehend aus Ethylenglykol, Diethylenglykol, Triethylenglykol, 1,2-Propylenglykol, 1,3-Propandiol, 1,4-Butandiol, 1,6-Hexandiol, 3-Methyl-1,5-pentandiol, 2,2,4-Trimethyl-pentan-1,3-diol, 2-Butyl-2-ethyl-1,3-propandiol, 2,2-Dimethyl-1,3-propandiol, 2-Methyl-1,3-propandiol und 2-Ethyl-1,3-Hexandiol ist.

5. Klebeband gemäß mindestens einem der vorstehenden Ansprüche, **dadurch gekennzeichnet, dass** das Stoffmengenverhältnis der Gesamtheit der Verbindungen B zu der Gesamtheit der Polyester-Polyole A 0,30 bis 2,33 beträgt.

6. Klebeband gemäß mindestens einem der vorstehenden Ansprüche, **dadurch gekennzeichnet, dass** die chemische Vernetzung durch Umsetzung des Polyurethan-Prepolymers mit mindestens einem Polyisocyanat D mit drei oder mehr Isocyanatgruppen erfolgt.

7. Klebeband gemäß Anspruch 6, **dadurch gekennzeichnet, dass** das Verhältnis der Summe der Isocyanatgruppen aller Polyisocyanate C und D zur Summe der Hydroxygruppen der Komponenten A und B 0,9 bis 1,05 beträgt.

**Claims**

1. Adhesive tape comprising
at least one carrier material and
at least one composition comprising at in total at least 60 wt% one or more polyurethanes obtainable by chemical crosslinking of a polyurethane prepolymer obtainable by chemical reaction of

a) one or more aliphatic polyester polyols A having a hydroxy functionality of from 1.8 up to and including 2 and a number-average molecular weight of greater than or equal to 1000 g/mol;
b) one or more compounds B having a hydroxy functionality of from 1.8 up to and including 2 and a number-average molecular weight of less than 1000 g/mol;
c) one or more aliphatic diisocyanates C;

where the ratio of the total number of isocyanate groups to the total number of hydroxy groups in the compounds participating in the chemical reaction is greater than or equal to 0.4 and less than 1,
as pressure-sensitive adhesive.

2. Adhesive tape according to Claim 1, **characterized in that** the molecular weight of the polyester polyols A is greater than 1500 g/mol.

3. Adhesive tape according to either of Claims 1 and 2, **characterized in that** the ratio of the total number of isocyanate groups to the total number of hydroxy groups in the compounds participating in the chemical reaction is greater than or equal to 0.7 and less than or equal to 0.9.

4. Adhesive tape according to at least one of the preceding claims, **characterized in that** at least one of the polyester polyols A is the product of a chemical reaction of

- one or more organic dicarboxylic acids selected from the group consisting of adipic acid, succinic acid, caprolactones, fumaric acid, pimelic acid, suberic acid, and glutaric acid with
- one or more diols selected from the group consisting of ethylene glycol, diethylene glycol, triethylene glycol, 1,2-propylene glycol, 1,3-propanediol, 1,4-butanediol, 1,6-hexanediol, 3-methyl-1,5-pentanediol, 2,2,4-trimethylpentane-1,3-diol, 2-butyl-2-ethyl-1,3-propanediol, 2,2-dimethyl-1,3-propanediol, 2-methyl-1,3-propanediol, and 2-ethyl-1,3-hexanediol.

5. Adhesive tape according to at least one of the preceding claims, **characterized in that** the amount-of-substance ratio of the entirety of the compounds B to the entirety of the polyester polyols A is 0.30 to 2.33.

6. Adhesive tape according to at least one of the preceding claims, **characterized in that** the chemical crosslinking takes place by reaction of the polyurethane prepolymer with at least one polyisocyanate D having three or more isocyanate groups.

7. Adhesive tape according to Claim 6, **characterized in that** the ratio of the sum of the isocyanate groups of all polyisocyanates C and D to the sum of the hydroxy groups of components A and B is 0.9 to 1.05.

**Revendications**

1. Ruban adhésif, comprenant
au moins un matériau support et
au moins une composition, contenant au total au moins 60% en poids d'un ou de plusieurs polyuréthanes, pouvant être obtenus par réticulation chimique d'un prépolymère de polyuréthane, pouvant être obtenu par réaction chimique

a) d'un ou de plusieurs polyester-polyols aliphatiques A, présentant une fonctionnalité hydroxy de 1,8 à 2 inclus et un poids moléculaire moyen en nombre égal/supérieur à 1000 g/mole ;
b) d'un ou de plusieurs composés B, présentant une fonctionnalité hydroxy de 1,8 à 2 inclus et un poids moléculaire moyen en nombre inférieur à 1000 g/mole ;
c) d'un ou de plusieurs diisocyanates aliphatiques C ;

le rapport du nombre total de groupes isocyanate au nombre total des groupes hydroxy des substances participant à la réaction chimique étant supérieur/égal à 0,4 et inférieur à 1,
en tant que masse autoadhésive.

2. Ruban adhésif selon la revendication 1, **caractérisé en ce que** le poids moléculaire des polyester-polyols A est supérieur à 1500 g/mole.

**3.** Ruban adhésif selon l'une quelconque des revendications 1 et 2, **caractérisé en ce que** le rapport du nombre total de groupes isocyanate au nombre total des groupes hydroxy des substances participant à la réaction chimique est supérieur/égal à 0,7 et inférieur/égal à 0, 9.

**4.** Ruban adhésif selon au moins l'une quelconque des revendications précédentes, **caractérisé en ce qu'**au moins un des polyester-polyols A est le produit d'une réaction chimique

- d'un ou de plusieurs acides dicarboxyliques organiques, choisis dans le groupe constitué par l'acide adipique, l'acide succinique, les caprolactames, l'acide fumarique, l'acide pimélique, l'acide subérique et l'acide glutarique avec
- un ou plusieurs diols choisis dans le groupe constitué par l'éthylèneglycol, le diéthylèneglycol, le triéthylèneglycol, le 1,2-propylèneglycol, le 1,3-propanediol, le 1,4-butanediol, le 1,6-hexanediol, le 3-méthyl-1,5-pentanediol, le 2,2,4-triméthylpentane-1,3-diol, le 2-butyl-2-éthyl-1,3-propanediol, le 2,2-diméthyl-1,3-propanediol, le 2-méthyl-1,3-propanediol et le 2-éthyl-1,3-hexanediol.

**5.** Ruban adhésif selon au moins l'une quelconque des revendications précédentes, **caractérisé en ce que** le rapport des quantités de la totalité des composés B à la totalité des polyester-polyols A vaut 0,30 à 2,33.

**6.** Ruban adhésif selon au moins l'une quelconque des revendications précédentes, **caractérisé en ce que** la réticulation chimique est effectuée par transformation du prépolymère de polyuréthane avec au moins un polyisocyanate D présentant trois groupes isocyanate ou plus.

**7.** Ruban adhésif selon la revendication 6, **caractérisé en ce que** le rapport de la somme des groupes isocyanate de tous les polyisocyanates C et D à la somme des groupes hydroxy des composants A et B vaut 0,9 à 1,05.

**IN DER BESCHREIBUNG AUFGEFÜHRTE DOKUMENTE**

**In der Beschreibung aufgeführte Patentdokumente**

- GB 2128199 A
- WO 9839157 A1
- WO 9914261 A1
- EP 1849811 B1
- US 5698621 A
- GB 2368300 A
- DE 20208094 U
- DE 10012261 A1
- WO 0168364 A1
- WO 9700772 A1
- US 5292560 A
- DE 19722627 A1
- EP 1656669 B1
- JP 2007070422 A
- JP 63189486 A
- JP 08157798 A
- DE 2845541 A

**In der Beschreibung aufgeführte Nicht-Patentliteratur**

- **SATAS.** Handbook of Pressure Sensitive Adhesive Technology. 1999, 153-203